# EUROPEAN PATENT SPECIFICATION

(11) **EP 1 598 546 B1**
(45) Date of publication and mention of the grant of the patent: **30.04.2008**
(21) Application number: 04011704.6
(22) Date of filing: 17.05.2004
(51) Int. Cl.: F02M 43/00, F02M 69/46, F02M 55/02

(54) **Fuel Rail Component**
Kraftstoffverteilerkomponent
Composant de rampe de combustible

(43) Date of publication of application: 23.11.2005
(73) Proprietor: Ford Global Technologies, LLC, Dearborn, MI 48126 (US)
(72) Inventor: Morén, Mats, 417 19 Göteborg (SE); Bertolino, Björn, 433 60 Sävedalen (SE); Stälhammar, Per, 146 36 Tullinge (SE); Teden, Johan, 146 54 Tullinge (SE)
(74) Representative: Engstrand, Maria Linnéa

(56) References cited:
- DE-A- 19 716 221
- US-A- 4 402 296
- US-A- 5 775 282
- US-A- 5 890 459
- US-A- 6 142 107
- US-B1- 6 250 290

## Description

### Field of the invention

The present invention relates to a dual-fuel system for a combustion engine comprising at least one first injector for feeding a first fuel to the engine and at least one second injector for feeding a second fuel to the engine, said first and second injectors being separate and said first and second fuels being different from each other. The invention also relates to a fuel rail component for a dual - fuel system.

### Background of the invention

Dual-fuel systems for vehicles are systems which employ two different kinds of fuel for injection to the engine of the vehicle. In general, and in the system of the invention, the fuels are used separately, i.e. only one fuel is used at a time. Several variants of arrangements for realising the supply of the two different fuels to the injection system are known. In some systems, the switch between the different fuels is made gradually which means that during a few injections, both fuels may actually be injected to the engine. However, the main principle of these systems is still that only one fuel should be used at the time, as opposed to systems that continually use a mixture of two fuels.

Some dual fuel systems in which only one fuel is used at a time have been proposed, in which only one set of fuel injectors is used for the two fuels. These systems have the potential disadvantage that the only set of fuel injectors require complex control systems in order to adapt to the different properties of the two fuels, and/or that compromises must be made regarding the function of the injectors in order to avoid problems such as deterioration of one of the fuels.

In US 4,402,296, a method and system is disclosed for supplying an internal combustion engine with a plurality of fuels wherein a first fuel source 10 which is conventional lead-free gasoline is provided and a second source of fuel 12 which consists of from 180 to 190 proof ethanol is provided as a second fuel source. The fuels are maintained separately and are fed to the intake manifold 18 of the internal combustion engines separately and simultaneously via injection valves 34 and 36. Upon injection to the heated intake manifold, the fuels are vaporized and mixed in the vapor phase prior to combustion in the combustion chambers 32. An electric coil 46 is provided for heating the alcohol fuel and enhancing vaporization.

US 6,142,107 discloses a fuel injection system with a common rail pressure reservoir which is filled with fuel at high pressure, and a dual substance nozzle for dual-fluid injection of fuel and a supplementary liquid into an internal combustion engine. The system includes a 2/2-way valve in the injection line between the common rail pressure reservoir and a pressure chamber surrounding the nozzle needle of the dual substance nozzle.

Other systems have completely separate injection means for the different fuels. In a typical system using petrol and Liquified Petroleum Gas (LPG) or alternatively petrol and Compressed Natural Gas (CNG), there is one set of injectors for the petrol and another set of injectors for the gas. The set of injectors for the petrol is in communication with a petrol supply rail which is in fluid connection with a petrol tank. The set of injectors for the gas is in communication with gas supply rail which is in fluid connection with a gas tank. An advantage with this type of system is that parameters such as the pressure of the different fuels may be individually set for each fuel so as to optimise the function of the injectors and of the engine.

A disadvantage with the separate systems is however that they take up more space than a common one-fuel system, and therefore are more complicated to pack. Also, there are more engine parts and consequently longer assembly times involved than with a conventional one-fuel system.

In this kind of systems only one fuel is used at the time, except possibly during a brief fuel switching process as described above. Thus, in general, one of the fuels will always be left unused and some of that fuel risks turning hot while stagnant in the respective fuel rail or injector. This might result in too hot fuel being injected immediately after a fuel switch, which in turn may lead to less than optimum engine behaviour.

### Summary of the invention

It is an object of the present invention to provide a dual-fuel system for a combustion engine comprising a first injector for feeding a first fuel to the engine and a second injector for feeding a second fuel to the engine, which diminishes or removes at least one disadvantage with prior art systems.

This object is achieved by a dual-fuel system for a combustion engine according to claim 1 the system comprising a fuel rail component defining a first fuel path for supplying said first fuel to said first injector and a second fuel path for supplying said second fuel to said second injector, said first and second fuel paths being separate.

Providing the two fuel paths as one component simplifies assembly of the engine and reduces the space required for installation. Further, it enables constructions where the problems of over-heating of fuel may be diminished. It also allows constructions where the fuel injectors for both fuels may be located in a favourable position to the air inlet manifold of the engine.

The first and second fuel paths are arranged side-by-side. This arrangement is suitable for reducing the space as mentioned above. Further, the paths running side-by-side enables cooling down of the unused fuel by heat transfer being possible due to the location of the unused fuel next to the path of the fuel being used at the moment. Accordingly, the problem of over-heated stagnant fuel may be diminished. Finally, a side-by-side configuration enables the fuel injectors of both fuels to be conveniently positioned.

The fuel rail component could be constituted of separate parts that have been assembled so as to function and be handled as one component. However, it is preferred that the fuel rail component is formed as a unitary member. This further diminishes the total assembly time for the products, and is favourable in view of the heat transfer aspect mentioned above.

Advantageously, the fuel rail component may be formed from a heat conductive material, preferably a metal, most preferred extruded aluminium or sheet metal steel. Aluminium is advantageous as it is heat conductive, light, and easy to form for example by extrusion.

The first fluid path may advantageously be arranged in fluid connection with a first fluid tank, and the second fluid path in fluid connection with a second fluid tank. In order to suit the different fuels to be used, the second fluid path may have a smaller cross-section than the first fluid path. Differently sized cross-sections may be employed for solving different problems depending on e. g. the properties of the fuels and the engine. One problem that might be solved by selecting different cross-sections is the problem of diminishing pulses occurring in the fuels when in the respective fuel path.

Advantageously, a plurality of first injectors and a plurality of second injectors are arranged adjacent to the fuel rail. Preferably, the pluralities of first and second injectors are arranged on the same side along the fuel rail. This arrangement allows for a suitable position of the injectors at an air inlet manifold of an engine, as well as for easy assembly of the engine.

In a second aspect, the invention relates to a fuel rail component for a dual-fuel system in a vehicle, said fuel rail defining a first fuel path and a second fuel path being arranged side-by-side, said first fuel path having connector openings for receiving a first injector and said second fuel path having connector openings for receiving a second injector.

Preferably, and for the same reasons as set out above, the fuel rail component may be formed as a unitary member. Advantageously, the first fuel path may have a smaller cross-section than the second fuel path. Also, the fuel rail component may preferably be made of a heat conductive material, most preferred aluminium.

Additional features and advantages of the invention will appear more clearly from the following detailed description of a preferred embodiment of the invention, which is given by way of non-limiting example only and with reference to the accompanying drawings.

### Brief description of the accompanying drawings

Fig. 1 is a schematic perspective view of an embodiment of a fuel rail component for a dual-fuel system according to the invention.
Fig. 2 is a schematic perspective view of a fuel rail component when arranged with injectors and an air inlet manifold of a five cylinder engine in embodiment of a dual-fuel system according to the invention.

### Detailed description of preferred embodiments of the invention

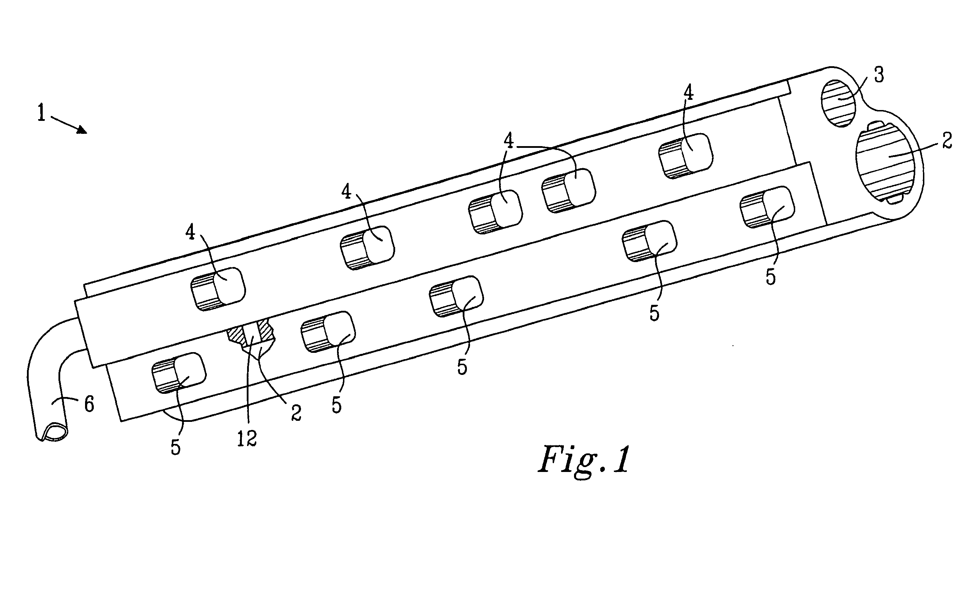

Fig. 1 depicts schematically a fuel rail component according to one embodiment of the second aspect of the invention, which is suitable for installation in a dual-fuel system according to the first aspect of the invention.

The fuel rail component 1 defines a first fuel path 2 and a second fuel path 3 that are arranged side-by side, in parallel to each other. The first fuel path 2 is provided with a plurality of connector openings 5 for connection to a first set of injectors, and the second fuel path 3 is provided with a plurality of connector openings 4 for connection to a second set of injectors. As seen in Fig. 1, the connector openings 5 and 4 are arranged on one side of the fuel rail component 1.

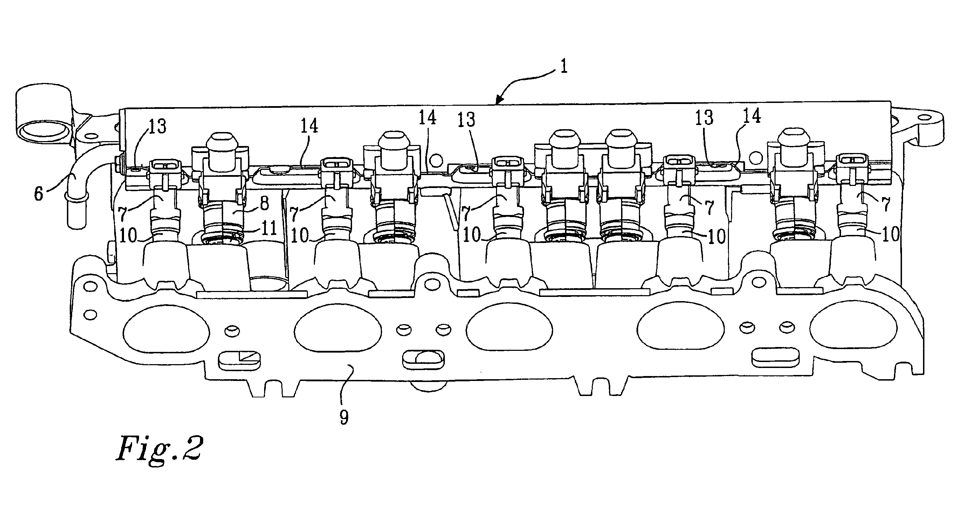

The fuel rail component 1 is formed as a unitary member. In a preferred embodiment, it is formed from extruded aluminium. As seen in Figs 1 and 2, the second fuel path 3 has a smaller cross-section than the first fuel path 2. The second fuel path 3 is at one end connected to a feed pipe 6 for supplying a fuel; in this case the feed pipe 6 accomplishes a fluid connection to a first fuel tank for gaseous fuel, such as CNG or LPG. The first fuel path 2 may be adapted so as to fit with conventional systems for supply of a second fuel. In this case, the first fuel path 2 is in fluid connection with a second fuel tank for supply of gasoline, via a fuel inlet 12 located on the side of the rail.

As seen in Fig. 2, in one embodiment of a dual-fuel system according to the invention, a fuel rail component 1 is arranged for supplying a first fuel to a first fuel injector 7 via the first fluid path 2, and a second fuel to a second fuel injector 8 via the second fluid path 3. In this case, a plurality of first fuel injectors 7, namely five, is connected to the first fuel path 2 via the first connector openings 5. Also, a plurality of second fuel injectors 8, namely five, is connected to the second fuel path 3 via the second connector openings 4. The pluralities of first and second injectors 7, 8 are arranged on the same side of the fuel rail component 1. In this case, the first injectors 7 are gasoline injectors, and the second injectors 8 are gas injectors preferably for CNG. The first and second injectors 7, 8 are attached to the fuel rail component 1 by means of a mounting plate 14, which in turn is attached to the fuel rail component 1. Also, the first and second injectors 7, 8 are arranged to be directed in the same direction from the fuel rail component 1.

This configuration enables easy assembly to an air inlet manifold 9 of the engine, as seen in Fig. 2. The air inlet manifold 9 is provided with first connectors 10 for connection to the first injectors 7 and with second connectors 11 for connection to the second injectors 8. It is appreciated that the assembly of the system may easily be made by parallel movement of the fuel rail component in relation to the air inlet manifold 9.

Valves and other regulatory means are arranged so as to control the pressure and supply of the fuels, as is known in the art and may easily be applied by the person skilled in the art.

When the described system is in use, either the first or the second fuel will generally be used. Accordingly, when the second injectors 8 are injecting the second fuel to the air inlet manifold 9, the second fuel will flow through the second fluid path 3. However, the first fuel will in this situation stagnate in the first fluid path 2, since the first injectors 7 are not in use. Normally, a fuel stagnating in a fluid path will heat up, which risks damaging the fuel. A fuel flowing in a fuel path such as a pipe will however cause the pipe to cool down. In this case, the heat generated in the still fuel in the first fluid path 2 will be compensated by the cooling effect from the second fluid path 3, in which the second fuel is flowing. Since the fluid paths 2, 3 are extending in parallel to each other, the heat transfer effect between them is enhanced. This effect is further pronounced since the fuel rail component is made of a heat conductive material as aluminium. Accordingly, the problem of fuel heating and possible hot fuel start problems might be diminished. (Naturally, the cooling effect will function similarly when the second fuel is still and the first fuel is flowing.)

The described embodiment of the invention is by no means exhaustive; instead it is illustrative of the present invention. The person skilled in the art will readily appreciate that modifications may be made. For example, the cross-sections of the fuel paths are illustrated as being circular, and although this embodiment is preferred, one could imagine other shapes of the cross-sections of the fuel paths. The system and component according to the invention are not restricted to use with any particular number of injectors, but may be adapted for engines having different numbers of cylinders.

## Claims

1. A fuel rail for a dual-fuel system in a vehicle, **characterized in that** said fuel rail defines a first fuel path (2) and a second fuel path (3) being arranged side-by-side parallel to each other, enabling cooling down of an unused fuel in the first (2) or second (3) fuel path by heat transfer due to the location of the unused fuel next to the path of the fuel being used at the moment, said first fuel path (2) having at least one connector opening (5) for receiving a first injector (7) and said second fuel path (3) having at least one connector opening (4) for receiving a second injector (8).

2. A fuel rail according to claim 1, wherein said fuel rail (1) is formed as a unitary member.

3. A fuel rail according to claim 1 or 2, wherein said second fuel path (3) has a smaller cross-section than said first fuel path (2).

4. A fuel rail according to any one of the claims 1 to 3, wherein said fuel rail (1) is formed from a heat conductive material, preferably a metal, most preferred extruded aluminium or sheet metal steel.

5. A dual-fuel system for a combustion engine comprising at least one first injector (7) for feeding a first fuel to the engine and at least one second injector (8) for feeding a second fuel to the engine, said first and second injectors (7, 8) being separate and said first and second fuels being different from each other, wherein said dual-fuel system comprises a fuel rail (1) according to any one of claims 1 - 4.

6. A dual-fuel system according to claim 5, wherein said first fuel path (2) is in fluid connection with a first fluid tank, and said second fuel path (3) is in fluid connection with a second fluid tank.

7. A dual-fuel system according to claim 6 or 7, wherein the first and second injectors (7, 8) are arranged on the same side of the fuel rail (1).

## Patentansprüche

1. Kraftstoffleitung für ein Doppel-Kraftstoffsystem in einem Fahrzeug, **dadurch gekennzeichnet, dass** die Kraftstoffleitung einen ersten Kraftstoffweg (2) und einen zweiten Kraftstoffweg (3) definiert, die nebeneinander und zueinander parallel angeordnet sind und ein Abkühlen von nicht verwendetem Kraftstoff in dem ersten Kraftstoffweg (2) oder in dem zweiten Kraftstoffweg (3) durch Wärmeübertragung ermöglichen, weil sich der nicht verwendete Kraftstoff in der Nähe des Weges des momentan verwendeten Kraftstoffs befindet, wobei der erste Kraftstoffweg (2) wenigstens eine Verbinderöffnung (5) besitzt, um eine erste Einspritzdüse (7) aufzunehmen, und der zweite Kraftstoffweg (3) wenigstens eine Verbinderöffnung (4) besitzt, um eine zweite Einspritzeinrichtung (8) aufzunehmen.

2. Kraftstoffleitung nach Anspruch 1, wobei die Kraftstoffleitung (1) als einteiliges Organ ausgebildet ist.

3. Kraftstoffleitung nach Anspruch 1 oder 2, wobei der zweite Kraftstoffweg (3) einen kleineren Querschnitt als der erste Kraftstoffweg (2) hat.

4. Kraftstoffweg nach einem der Ansprüche 1 bis 3, wobei die Kraftstoffleitung (1) aus einem wärmeleitenden Material, vorzugsweise aus Metall und am stärksten bevorzugt aus stranggepresstem Aluminium oder aus Stahlblech, gebildet ist.

5. Doppel-Kraftstoffsystem für eine Brennkraftmaschine die wenigstens eine Einspritzeinrichtung (7) zum Zuführen eines ersten Kraftstoffs zu der Maschine und wenigstens eine zweite Einspritzeinrichtung (8) zum Zuführen eines zweiten Kraftstoffs zu der Maschine umfasst, wobei die erste und die zweite Einspritzeinrichtung (7, 8) voneinander getrennt sind und der erste und der zweite Kraftstoff voneinander verschieden sind, wobei das Doppel-Kraftstoffsystem eine Kraftstoffleitung (1) nach einem der Ansprüche 1-4 enthält.

6. Doppelkraftstoffsystem nach Anspruch 5, wobei der erste Kraftstoffweg (2) mit einem ersten Fluidtank in einer Fluidverbindung steht und der zweite Kraftstoffweg (3) mit einem zweiten Fluidtank in einer Fluidverbindung steht.

7. Doppelkraftstoffsystem nach Anspruch 6 oder 7, wobei die erste und die zweite Einspritzeinrichtung (7, 8) auf derselben Seite der Kraftstoffleitung (1) angeordnet sind.

## Revendications

1. Rampe de carburant pour un système double carburant dans un véhicule, **caractérisée en ce que** ladite rampe de carburant définit une première voie de carburant (2) et une seconde voie de carburant (3) disposées côte à côte, parallèles entre elles, permettant le refroidissement d'un carburant non utilisé dans la première (2) ou seconde (3) voie de carburant par transfert thermique grâce à l'emplacement du carburant non utilisé à proximité de la voie du carburant en cours d'utilisation, ladite première voie de carburant (2) ayant au moins une ouverture de connecteur (5) pour recevoir un premier injecteur (7) et ladite seconde voie de carburant (3) ayant au moins une ouverture de connecteur (4) pour recevoir un second injecteur (8).

2. Rail de carburant selon la revendication 1, dans laquelle ladite rampe de carburant (1) est formée en tant qu'élément unitaire.

3. Rampe de carburant selon la revendication 1 ou la revendication 2, dans laquelle ladite seconde voie de carburant (3) présente une section transversale plus petite que ladite première voie de carburant (2).

4. Rampe de carburant selon l'une quelconque des revendications 1 à 3, dans laquelle ladite rampe de carburant (1) est formée à partir d'un matériau thermiquement conducteur, de préférence un métal, de façon plus préférée de l'aluminium extrudé ou une tôlerie en acier.

5. Système à double carburant pour un moteur à combustion comprenant au moins un premier injecteur (7) pour alimenter un premier carburant au moteur et au moins un second injecteur (8) pour alimenter un second carburant au moteur, lesdits premier et second injecteurs (7, 8) étant séparés et lesdits premier et second carburants étant différents l'un de l'autre, dans lequel ledit système à double carburant comprend une rampe de carburant (1) selon l'une quelconque des revendications 1 - 4.

6. Système à double carburant selon la revendication 5, dans lequel ladite première voie de carburant (2) est en connexion de fluide avec un premier réservoir de fluide et ladite seconde voie de carburant (3) est en connexion de fluide avec un second réservoir de fluide.

7. Système à double carburant selon la revendication 6 ou 7, dans lequel les premier et second injecteurs (7, 8) sont disposés sur le même côté que la rampe de carburant (1).
